(19) Europäisches Patentamt / European Patent Office / Office européen des brevets

(11) **EP 2 220 797 B1**

(12) **FASCICULE DE BREVET EUROPEEN**

(45) Date de publication et mention
de la délivrance du brevet:
**03.08.2016 Bulletin 2016/31**

(51) Int Cl.:
***H04L 12/18*** *(2006.01)*

(21) Numéro de dépôt: **08849549.4**

(22) Date de dépôt: **28.10.2008**

(86) Numéro de dépôt international:
**PCT/FR2008/051941**

(87) Numéro de publication internationale:
**WO 2009/063151 (22.05.2009 Gazette 2009/21)**

(54) **PROCEDE DE DIFFUSION DE PAQUETS DE DONNEES DANS UN RESEAU DE NOEUDS MOBILES ET SYSTEME ASSOCIE**

VERFAHREN ZUM VERTEILEN VON DATENPAKETEN IN EINEM MOBILKNOTENNETZ UND ENTSPRECHENDES SYSTEM

METHOD FOR DISTRIBUTING DATA PACKETS IN A MOBILE NODE NETWORK AND ASSOCIATED SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **16.11.2007 FR 0759115**

(43) Date de publication de la demande:
**25.08.2010 Bulletin 2010/34**

(73) Titulaire: **Orange**
**75015 Paris (FR)**

(72) Inventeurs:
  • **JERBI, Moez**
    **F-92130 Issy les Moulineaux (FR)**
  • **SENOUCI, Sidi-Mohammed**
    **F-22300 Lannion (FR)**
  • **GHAMRI-DOUDANE, Yacine**
    **F-92110 Clichy (FR)**

(74) Mandataire: **Desormiere, Pierre-Louis et al**
**Cabinet Beau de Loménie**
**158, rue de l'Université**
**75340 Paris Cedex 07 (FR)**

(56) Documents cités:
**US-A1- 2005 221 759      US-A1- 2006 235 967**
**US-A1- 2007 115 868**

• LITTLE T ET AL: "An information propagation scheme for VANETs" INTELLIGENT TRANSPORTATION SYSTEMS, 2005. PROCEEDINGS. 2005 IEEE VIENNA, AUSTRIA 13-16 SEPT. 2005, PISCATAWAY, NJ, USA,IEEE, 13 septembre 2005 (2005-09-13), pages 155-160, XP010843015 ISBN: 978-0-7803-9215-1 cité dans la demande
• LOCHERT C ET AL: "A routing strategy for vehicular ad hoc networks in city environments" INTELLIGENT VEHICLES SYMPOSIUM, 2003. PROCEEDINGS. IEEE JUNE 9-11, 2003, PISCATAWAY, NJ, USA,IEEE, 9 juin 2003 (2003-06-09), pages 156-161, XP010645867 ISBN: 978-0-7803-7848-3

**EP 2 220 797 B1**

**Description**

Arrière-plan de l'invention

L'invention se situe dans le domaine des réseaux de communication sans fil et concerne plus particulièrement la diffusion de données dans un réseau ad-hoc.

L'invention trouve une utilisation privilégiée mais non limitative dans les réseaux ad-hoc véhiculaires communément dénommés VANETs (« Vehicular Ad-hoc NETworks »), dans lesquels chaque noeud de communication est un véhicule apte à se déplacer selon des voies de circulation d'un réseau routier prédéfini.

Dans un réseau ad-hoc véhiculaire, les noeuds mobiles se répartissent en différents groupes de manière dynamique au cours du temps, de sorte qu'à chaque instant les noeuds mobiles au sein d'un même groupe sont interconnectés, sans pour autant que les différents groupes soient reliés entre eux.

La formation de ces groupes est liée aux conditions de trafic et de circulation, notamment à la présence de feux de signalisation en environnement urbain.

De plus, chaque groupe de noeuds est susceptible de se former et de se désintégrer de manière dynamique, en fonction du déplacement de chaque noeud mobile susceptible de quitter de manière aléatoire le groupe à tout instant et d'en intégrer un autre à un instant ultérieur.

Il en résulte que le réseau subit des changements de topologie fréquents avec un degré de connectivité hautement variable au cours du temps. De ce fait, il est difficile de concevoir des algorithmes performants et simples à mettre en oeuvre pour diffuser des données à travers l'ensemble des noeuds d'un tel réseau.

Dans un document intitulé "An Information Propagation Scheme for VANETs" publié dans "Proceedings of the 8th International IEEE Conference on Intelligent Transportation Systems, Vienna, Austria, September 13-16, 2005", Thomas D.C. Little et Ashish Agarwal décrivent un procédé de diffusion de données dans un réseau ad-hoc véhiculaire selon lequel des paquets de données sont propagés dans un même sens de déplacement le long d'une voie de circulation à double sens, selon un protocole dit DPP ("Directional Propagation Protocol").

Toutefois, ce protocole nécessite un mécanisme de formation et de maintenance de groupes de noeuds qui est difficile à mettre en oeuvre et qui peut devenir très coûteux en termes d'utilisation de la bande passante. En outre, ce protocole ne permet pas une diffusion optimale de données à l'ensemble des noeuds mobiles se déplaçant le long d'une voie de circulation à double sens.

Objet et résumé de l'invention

La présente invention propose un procédé de diffusion d'au moins un paquet de données dans un réseau comprenant un ensemble de groupes de noeuds mobiles.

Le procédé comprend une phase de diffusion intra-groupe, lors de laquelle au moins un paquet de données est diffusé aux noeuds mobiles appartenant à un même groupe.

La phase de diffusion intra-groupe comprend une étape de diffusion initiale, lors de laquelle un noeud source diffuse ledit au moins un paquet de données à un ensemble de noeuds voisins.

Conformément à la présente invention, la phase de diffusion intra-groupe comprend en outre :

-   une étape d'élection de deux noeuds de propagation se déplaçant en sens opposés et localisés de chaque côté du noeud source, lors de laquelle un premier noeud voisin du noeud source est élu premier noeud de propagation à condition qu'il soit localisé en aval du noeud source par rapport au sens de déplacement du noeud source et qu'il se déplace dans le même sens que le noeud source et lors de laquelle un deuxième noeud voisin dudit noeud source est élu deuxième noeud de propagation, à condition qu'il soit localisé en amont du noeud source par rapport au sens de déplacement du noeud source et qu'il se déplace dans le sens opposé au sens de déplacement dudit noeud source.

Le procédé de la présente invention permet d'élire au moins deux noeuds de propagation qui sont respectivement localisés de chaque côté du noeud source et qui se déplacent dans des sens opposés en s'éloignant l'un par rapport à l'autre. Le paquet se propage ainsi simultanément dans deux sens de déplacement opposés, ce qui accélère sa dissémination dans le réseau.

Selon une caractéristique de la présente invention, la phase de diffusion intra-groupe comprend en outre une étape de propagation directionnelle, au cours de laquelle chaque noeud de propagation élu transmet le paquet de données à un noeud relais se déplaçant dans le même sens que le noeud de propagation et situé en aval dudit noeud de propagation par rapport au sens de déplacement du noeud de propagation.

Lors de l'étape de propagation directionnelle, chaque noeud de propagation diffuse le paquet de données à ses noeuds voisins et le noeud relais est élu parmi les noeuds voisins du noeud de propagation en fonction de son éloignement par rapport au noeud de propagation. La prise en compte de l'éloignement de chaque noeud voisin du noeud de propagation par rapport audit noeud de propagation permet d'élire comme noeud relais un noeud situé en aval du noeud de propagation dans le sens de déplacement du noeud de propagation, qui est le noeud le plus éloigné parmi les noeuds situés à portée du noeud de propagation. De cette façon, le paquet est propagé le plus vite possible vers des noeuds situés en périphérie du groupe.

Selon une caractéristique de la présente invention, l'étape de propagation directionnelle comprend en outre au moins:

- une diffusion, lors de laquelle un noeud relais courant diffuse le paquet de données à ses noeuds voisins, et
- une élection, lors de laquelle un noeud relais suivant se déplaçant dans le même sens que le noeud relais courant et situé en aval dudit noeud relais courant par rapport au sens de déplacement du noeud relais courant est élu parmi les noeuds voisins dudit noeud relais courant, les étapes de diffusion et d'élection étant répétées jusqu'à ce qu'un noeud élu soit un noeud périphérique du groupe.

Ainsi, le paquet de données est diffusé successivement par un ensemble de noeuds relais dans le sens de déplacement de chaque noeud de propagation, jusqu'à ce que le paquet soit reçu par un noeud périphérique, dans chaque sens de déplacement. On notera bien sûr que si le noeud de propagation est proche de la périphérie du groupe, le nombre de noeuds relais peut être relativement restreint, voire même nul.

Selon une autre caractéristique de la présente invention, le procédé comprend en outre une phase de diffusion inter-groupe, lors de laquelle le paquet de données est transmis à un autre groupe de noeuds par l'intermédiaire d'un noeud de transport diffusant au cours de son déplacement le paquet de données à intervalles de temps réguliers lors d'une étape de diffusion périodique, jusqu'à ce que ledit noeud de transport reçoive au moins une requête de diffusion du paquet émise par au moins un autre noeud mobile.

On comprendra bien sûr qu'un tel noeud de transport est le dernier noeud périphérique du groupe porteur du paquet. Ce noeud périphérique, ne trouvant plus de noeud au sein du groupe situé en aval de lui dans son sens de déplacement, ne peut diffuser le paquet à un autre noeud relais. Il mémorise donc ce paquet et le transporte, au fil du déplacement du noeud, que l'on qualifie donc de noeud de transport.

En diffusant le paquet de données de manière périodique, un noeud de transport est susceptible de transmettre à ses éventuels noeuds voisins le paquet de données à chaque instant au cours de son déplacement. Ainsi, le paquet de données peut être transféré à d'autres groupes par l'intermédiaire du noeud de transport, dès que le noeud de transport retrouve de nouveaux noeuds voisins situés en aval de lui, c'est-à-dire dès qu'il intègre un nouveau groupe de noeuds. On notera que le noeud de transport peut aussi se faire dépasser par un noeud de son groupe, qui devient alors nouveau noeud périphérique, et donc nouveau noeud de transport.

Ceci est particulièrement avantageux pour diffuser des données à travers un réseau fortement partitionné comprenant un ensemble de groupes de noeuds qui ne sont a priori pas interconnectés.

Selon une autre caractéristique de la présente invention, l'intervalle de temps entre deux itérations successives de l'étape de diffusion périodique est déterminé par le noeud de transport en fonction de sa vitesse de déplacement.

L'ajustement dynamique de la valeur de cet intervalle de temps par le noeud de transport permet d'adapter sa fréquence d'émission en fonction de sa vitesse de déplacement, ce qui permet d'optimiser l'utilisation de la bande passante du réseau en évitant des diffusions trop fréquentes. Par exemple, la valeur de cet intervalle de temps est d'autant plus faible que la vitesse du noeud mobile est élevée. Ainsi, une diminution de la vitesse du noeud (par exemple due à la présence d'un obstacle) a pour effet de retarder la prochaine diffusion.

Selon une autre caractéristique de la présente invention, la phase de diffusion inter-groupe comprend en outre:

- une étape de test, lors de laquelle ledit noeud de transport détermine si son sens de déplacement a changé depuis la dernière diffusion dudit paquet par ledit noeud, et:
- dans la négative, il acquiert le statut de noeud de propagation et envoie une commande de diffusion dudit paquet à un noeud voisin en réponse à une requête de diffusion émise par ledit noeud voisin ;
- dans l'affirmative, il acquiert le statut de noeud source et envoie une commande de diffusion dudit paquet à deux noeuds voisins en réponse à une requête de diffusion émise par les noeuds voisins.

Avant toute nouvelle diffusion du paquet par le noeud de transport, ce dernier teste donc si son sens de déplacement a changé depuis la dernière diffusion du paquet qu'il a effectuée (i.e. depuis la dernière itération de l'étape de diffusion périodique, ou depuis la première diffusion effectuée après que le noeud de transport a reçu le paquet de données d'un noeud de propagation ou d'un noeud relais). Un changement de sens de déplacement survient notamment si le noeud de transport a changé de voie de circulation, par exemple en ayant bifurqué à une intersection.

On notera que la présente demande de brevet ne s'attache pas à décrire la façon dont le sens de déplacement d'un noeud est évalué. Une telle évaluation peut se faire notamment à partir des coordonnées géographiques des noeuds, par rapport aux points cardinaux.

La présente invention vise également un noeud mobile comprenant :

- des moyens de réception d'un paquet de données ;
- des moyens de détermination d'un temps d'attente, en fonction d'une distance séparant ledit noeud mobile d'un noeud mobile émetteur dudit paquet;
- des moyens pour commander, à l'issue dudit temps d'attente, des moyens d'émission d'une requête de diffusion dudit paquet vers ledit noeud mobile émetteur;
- des moyens pour commander, sur réception d'une commande de diffusion dudit paquet, des moyens de diffusion dudit paquet reçu ;
- des moyens pour diffuser le paquet de données à intervalles de temps réguliers jusqu'à réception d'au moins une requête de diffusion dudit paquet d'au moins un autre noeud mobile ;
- des moyens pour envoyer une commande de diffusion dudit paquet à au moins un noeud mobile ayant émis l'une desdites requêtes de diffusion reçues.

La présente invention vise également un système de diffusion d'au moins un paquet de données comprenant un ensemble de groupes de noeuds mobiles formant un réseau.

Conformément à la présente invention, un groupe de noeuds comprend :

- un noeud source diffusant ledit au moins un paquet de données à un ensemble de noeuds voisins au sein du groupe de noeuds;
- deux noeuds de propagation se déplaçant en sens opposés et localisés de chaque côté du noeud source, un premier noeud voisin du noeud source étant élu premier noeud de propagation à condition qu'il soit localisé en aval du noeud source par rapport au sens de déplacement du noeud source et qu'il se déplace dans le même sens que le noeud source et un deuxième noeud voisin du noeud source étant élu deuxième noeud de propagation, à condition qu'il soit localisé en amont du noeud source par rapport au sens de déplacement du noeud source et qu'il se déplace dans le sens opposé au sens de déplacement dudit noeud source, chaque noeud de propagation diffusant le paquet de données à ses noeuds voisins.

Selon une autre caractéristique de la présente invention, un groupe de noeuds comprend en outre:

- au moins un noeud relais se déplaçant dans le même sens qu'un desdits noeuds de propagation et situé en aval dudit noeud de propagation par rapport au sens de déplacement du noeud de propagation ; et
- au moins un noeud de transport, situé en périphérie du groupe de noeuds, adapté à recevoir ledit paquet de données d'un desdits noeuds de propagation ou d'un desdits noeuds relais et à transmettre le paquet de données à un autre groupe de noeuds du système.

A nouveau, on notera que le groupe de noeuds d'un tel système peut ne pas comprendre de noeud relais si le noeud de propagation est suffisamment proche de la périphérie du groupe pour transmettre directement le paquet de données à un noeud de transport.

La présente invention vise également un programme d'ordinateur exécuté sur des moyens de traitement (processeur) d'un noeud mobile selon l'invention, le programme comprenant des instructions pour exécuter les étapes suivantes :

- recevoir un paquet de données;
- déterminer un temps d'attente, en fonction d'une distance séparant ledit noeud mobile d'un noeud mobile émetteur dudit paquet;
- commander, à l'issue dudit temps d'attente, des moyens d'émission d'une requête de diffusion dudit paquet vers ledit noeud mobile émetteur;
- commander, sur réception d'une commande de diffusion dudit paquet, des moyens de diffusion dudit paquet reçu ;
- diffuser le paquet de données à intervalles de temps réguliers jusqu'à la réception d'au moins une requête de diffusion dudit paquet d'au moins un autre noeud mobile ; et
- envoyer une commande de diffusion dudit paquet à au moins un noeud mobile ayant émis l'une desdites requêtes de diffusion reçues.

Ce programme peut utiliser n'importe quel langage de programmation et être sous la forme de code source, de code objet, ou de code intermédiaire entre code source et code objet, tel que dans une forme partiellement compilée, ou dans n'importe quelle autre forme souhaitable.

Le programme décrit précédemment peut être stocké sur un support de données. Par conséquent, l'invention vise également un support d'enregistrement lisible par un ordinateur sur lequel est enregistré un programme d'ordinateur tel que décrit précédemment, ce programme étant stocké sous forme d'une série d'instructions de code de programme destinées à être exécutées sur un ordinateur et plus particulièrement sur des moyens de traitement (processeur) d'un terminal informatique sans fil.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé de diffusion de paquets de données selon l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :

- la figure 1 illustre de manière schématique un ensemble de groupes de noeuds mobiles formant un réseau ad-hoc véhiculaire dans un réseau routier urbain dans lequel la présente invention est mise en oeuvre;
- la figure 2, illustre de manière schématique un exemple de scénario selon lequel un paquet de données est diffusé au sein d'un groupe, lors d'une phase de diffusion intragroupe selon la présente invention ;
- la figure 3 illustre sous forme d'organigramme, les étapes de la phase de diffusion intragroupe selon l'invention ;
- la figure 4 illustre de manière schématique, un exemple de scénario selon lequel deux noeuds de propagation sont élus au voisinage d'un noeud source, conformément à la présente invention ;
- la figure 5 illustre sous forme d'organigramme, les étapes du procédé selon l'invention mises en oeuvre pour l'élection d'un noeud de propagation;
- la figure 6 illustre de manière schématique, un exemple de scénario dans lequel un paquet de données est envoyé à partir d'un noeud de propagation jusqu'à un noeud périphérique, conformément à la présente invention ;
- la figure 7 illustre sous forme d'organigramme, les étapes du procédé selon l'invention mises en oeuvre pour l'élection d'un noeud de propagation ;
- la figure 8 illustre de manière schématique, un premier exemple de scénario dans lequel un noeud périphérique transmet le paquet de données à un autre groupe de noeuds, lors d'une étape de diffusion intergroupe selon l'invention ;
- la figure 9 illustre de manière schématique, un deuxième exemple de scénario dans lequel un noeud périphérique transmet le paquet de données à un autre groupe de noeuds, lors d'une étape de diffusion intergroupe selon l'invention ; et
- la figure 10 illustre sous forme d'organigramme, les étapes du procédé selon l'invention mises en oeuvre lors de la phase de diffusion inter-groupe.

Description détaillée d'un mode de réalisation

La présente invention va être maintenant décrite de manière détaillée, dans le cadre d'un réseau ad-hoc inter-véhiculaire (VANET : « Vehicular Ad-Hoc Networks ») formé par une pluralité de noeuds mobiles se déplaçant à travers un réseau routier dans un environnement urbain.

On notera que si l'invention s'applique de manière particulièrement avantageuse en environnement urbain, elle n'est pas limitée pour autant à ce contexte, et peut être également mise en oeuvre sur un réseau autoroutier par exemple.

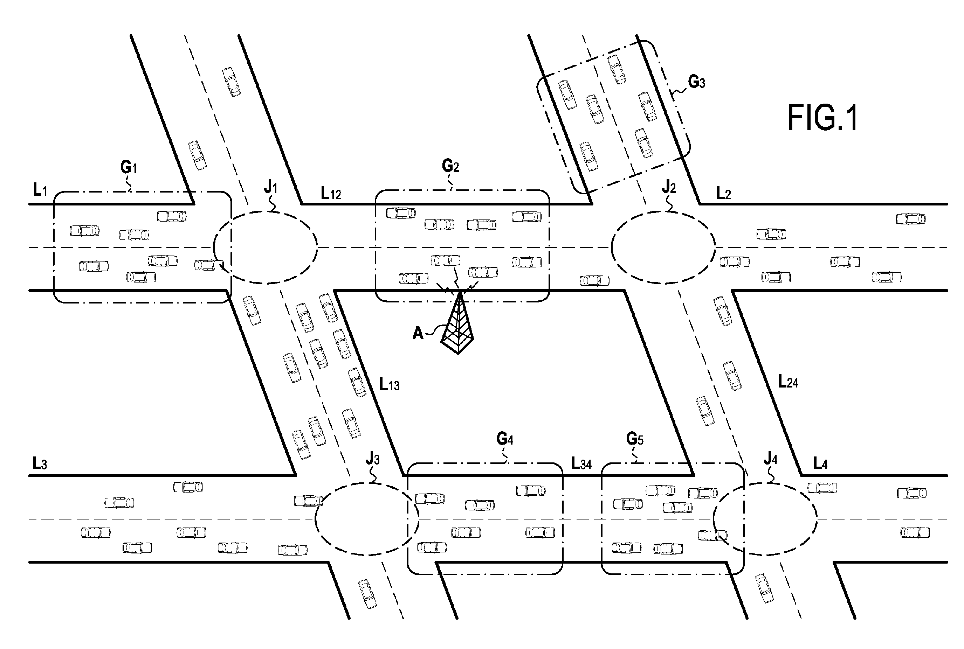

La figure 1 représente de manière schématique un ensemble de groupes $G_1$, $G_2$, $G_3$, $G_4$, $G_5$ de noeuds mobiles qui forment un réseau ad-hoc véhiculaire dans un réseau routier comprenant une pluralité de voies de circulations $L_1$, $L_{12}$, $L_2$, $L_{13}$, $L_3$, $L_{34}$, $L_{24}$, $L_4$ à double sens de circulation formant entre elles une pluralité d'intersections $J_1$, $J_2$, $J_3$, $J_4$.

Chaque noeud mobile membre du réseau ad-hoc inter-véhiculaire est constitué par un véhicule apte à se déplacer le long des voies de circulation et à travers les intersections $J_1$, $J_2$, $J_3$, $J_4$ du réseau routier.

Les véhicules sont aptes à se localiser à tout instant dans le réseau routier. Pour cela, chaque véhicule est équipé d'un appareil conventionnel de navigation assistée par satellite comprenant au moins :

- un récepteur, par exemple de type GPS (« Global Positioning System ») ou Galileo, apte à obtenir à chaque instant ses propres coordonnées géographiques ; et
- une carte routière numérique représentative du réseau routier couplée au récepteur de type GPS permettant de visualiser la position instantanée du véhicule sur la carte routière.

Chaque noeud est équipé d'un terminal de communication sans fil. Ainsi, chaque noeud est apte à communiquer avec ses noeuds voisins et plus particulièrement apte à diffuser des paquets de données.

Dans cet exemple, le terminal de communication est un émetteur/récepteur Wi-Fi™ communicant selon le protocole IEEE 802.11. Toutefois, l'homme du métier pourra bien évidemment utiliser d'autres technologies de communication sans fil telle que la technologie infrarouge.

Par la suite, le terme « noeud voisin » d'un noeud de référence désignera tout noeud situé dans un domaine de portée de transmission du noeud de référence délimité par un rayon de portée.

Dans cet exemple, le rayon de portée d'un noeud mobile est fixé à 250 mètres selon les recommandations du standard DSRC (« Dedicated Short Range Communications »).

Comme représenté sur la figure 1, les groupes de noeuds $G_1$, $G_2$, $G_3$, $G_4$, $G_5$ du réseau ad-hoc véhiculaire ne sont pas interconnectés (c'est-à-dire qu'ils ne peuvent pas communiquer directement les uns avec les autres, aucun noeud d'un groupe n'étant à portée d'un noeud d'un autre groupe). Les noeuds au sein d'un même groupe se déplacent selon des voies de circulation à double sens de circulation et sont interconnectés à un instant donné. Chaque groupe de noeuds se constitue de manière naturelle en fonction de l'éloignement relatif de chaque noeud selon sa portée de transmission radio.

Une borne de diffusion A est placée le long d'une voie de circulation $L_{12}$, de manière à introduire les paquets de données dans le réseau ad-hoc.

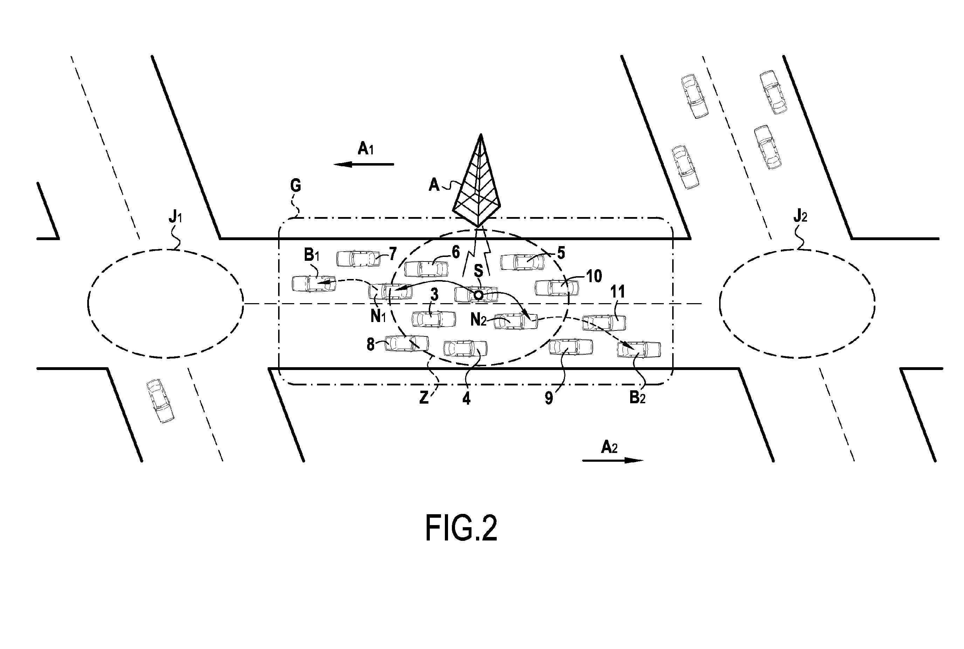

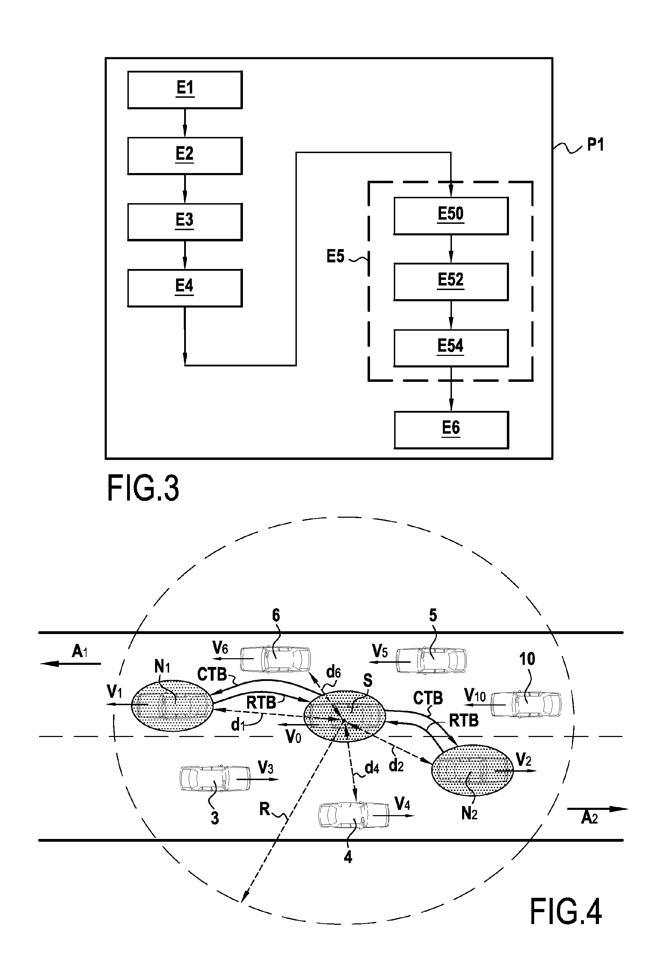

La diffusion d'un paquet de données D au sein d'un groupe de noeuds G, lors d'une phase de diffusion intra-groupe $P_1$, va être maintenant décrite en référence aux figures 2 et 3.

Lors d'une étape initiale $E_1$, le paquet de données D à diffuser est reçu par un noeud source S. Le noeud source S est un noeud porteur du paquet de données ayant la responsabilité d'initialiser la diffusion de ce paquet au sein du groupe auquel il appartient.

Dans cet exemple, on considère qu'un noeud est élu noeud source S, dès lors qu'il acquiert le paquet de données émis par la borne de diffusion A.

Le mécanisme mis en oeuvre pour l'élection du noeud source est conforme au protocole IEEE 802.11 RTS / CTS (Request to Send / Clear To Send), de sorte que la borne A sélectionne le noeud source parmi l'ensemble des noeuds localisés au voisinage de la borne A et ayant émis une requête. La borne A transmet de manière « unicast » le paquet de données accompagné de l'autorisation d'émettre au noeud situé le plus proche de la borne ou ayant été le noeud le plus rapide à émettre la requête.

Dans le cas où la borne n'existe pas, un noeud appartenant à un groupe de noeuds peut s'auto-élire en tant que noeud source à partir du moment où il génère de manière autonome un paquet de données à diffuser.

Lors d'une étape d'insertion $E_2$, le noeud source S insère dans le paquet de données des informations de localisation comprenant ses coordonnées géographiques courantes $C_n$, ainsi que ses coordonnées précédentes $C_{n-1}$ obtenues à un instant antérieur et qu'il garde en mémoire pendant une durée prédéterminée. Ces coordonnées courantes et précédentes sont prévues pour permettre à un noeud récepteur du paquet de données de déterminer le sens de déplacement du noeud source.

Lors de cette même étape d'insertion $E_2$, le noeud source génère dans le paquet de données un champ de type TTL (« Time To Live ») comprenant une variable H qui est destinée à identifier le statut du noeud porteur du paquet de données. La valeur de cette variable est initialisée à 0 par le noeud source qui l'incrémente avant de diffuser le paquet de données, de sorte que H= 1.

Lors d'une étape de diffusion initiale $E_3$, le noeud source S diffuse le paquet de données D à ses noeuds voisins $N_1$, $N_2$, 3, 4, 5, 6, localisés dans une zone de couverture Z de rayon égal à la portée de transmission R du noeud source S, comme illustré sur la figure 2.

Lors d'une étape d'élection $E_4$, deux noeuds de propagation $N_1$, $N_2$ sont élus parmi les noeuds voisins $N_1$, $N_2$, 3, 4, 5, 6, du noeud source S. Conformément à la présente invention, les noeuds de propagation élus $N_1$, $N_2$ sont respectivement localisés de chaque côté du noeud source S et se déplacent dans des sens opposés, en s'éloignant l'un par rapport à l'autre.

Chaque noeud de propagation élu $N_1$, $N_2$ permet l'amorçage d'une étape de propagation directionnelle $E_5$, lors de laquelle le paquet de données D est transmis par diffusions successives dans le sens de déplacement $A_1$, $A_2$ respectif de chaque noeud de propagation $N_1$, $N_2$.

Pour cela, lors d'une sous-étape de diffusion $E_{50}$, chaque noeud de propagation $N_1$, $N_2$ diffuse le paquet de données D à ses voisins respectifs 7, 8, B$_1$ ; 9, 10, 11, B$_2$.

Lors d'une sous-étape d'élection E$_{52}$, un noeud relais est élu parmi l'ensemble des noeuds voisins de chaque noeud de propagation N$_1$, N$_2$, chaque noeud relais élu se déplaçant dans le même sens que le noeud de propagation respectif et situé devant ce dernier par rapport à son sens de déplacement. Ainsi, le paquet de données est transmis à partir de chaque noeud de propagation à un noeud relais dans le sens de déplacement de chaque noeud de propagation.

Lors d'une sous-étape de diffusion E$_{54}$, chaque noeud relais élu diffuse le paquet de données à ses voisins. Dans l'exemple de la figure 2, les noeuds relais élus sont des noeuds situés en périphérie du groupe G et correspondent à des noeuds périphériques B$_1$, B$_2$.

La réception du paquet de données D par les noeuds périphériques B$_1$, B$_2$ lors d'une étape de réception E$_6$, marque la fin de l'étape de propagation directionnelle E$_5$ et de la phase de diffusion intragroupe P$_1$.

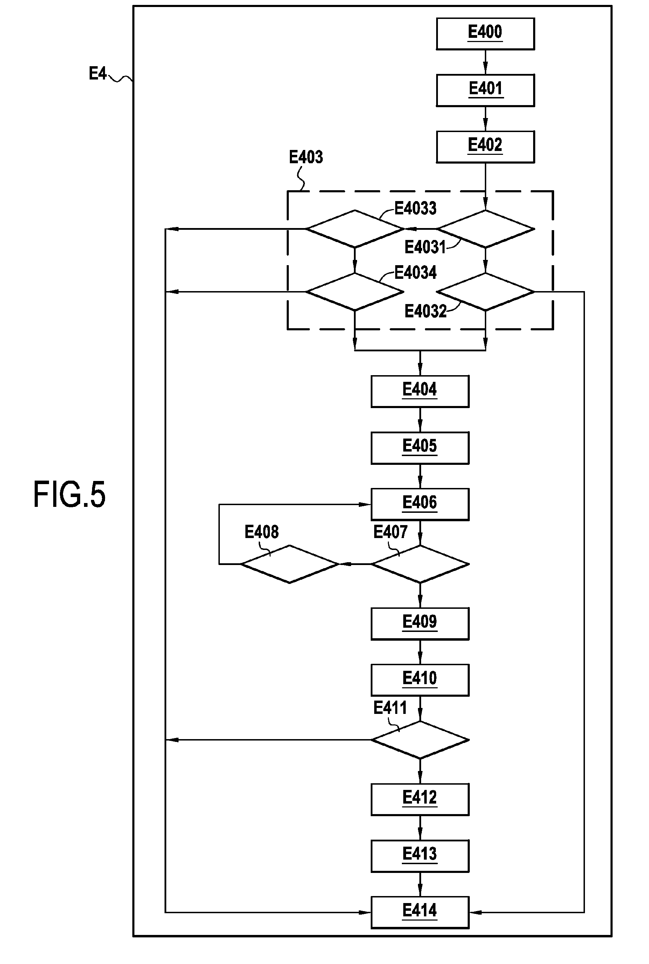

L'étape d'élection E$_4$ des noeuds de propagation N$_1$, N$_2$, va être maintenant décrite de manière détaillée en référence aux figures 4 et 5.

Sur réception (étape E$_{400}$) du paquet de données D émis par le noeud source S, chaque noeud voisin N$_1$, N$_2$, 3, 4, 5, 6 du noeud source S extrait du paquet de données D les coordonnées géographiques courantes C$_n$ et précédentes C$_{n-1}$ du noeud source S, ainsi que la valeur de la variable H=1, lors d'une étape d'extraction E$_{40}$.

Etant donné que H=1, chaque noeud récepteur du paquet détermine que le paquet est reçu d'un noeud source S.

A partir des coordonnées géographiques C$_n$, C$_{n-1}$ du noeud source S, chaque noeud voisin N$_1$, N$_2$, 3, 4, 5, 6, 10 du noeud source S détermine le sens de déplacement du noeud source S par rapport à son propre sens de déplacement, lors d'une première étape de calcul E$_{402}$.

Lors d'une étape de sélection E$_{403}$, chaque noeud voisin N$_1$, N$_2$, 3, 4, 5, 6, 10 du noeud source S détermine s'il est candidat à l'élection d'un noeud de propagation.

Pour cela, chaque noeud voisin N$_1$, N$_2$, 3, 4, 5, 6, 10 détermine s'il se déplace dans le même sens que le noeud source S (étape E$_{4031}$). Si tel est le cas, chaque noeud concerné N$_1$, 6, 5, 10 détermine s'il est localisé devant le noeud source S par rapport au sens de déplacement du noeud source S (étape E$_{4032}$). Parmi les noeuds N$_1$, 6, 5, 10 se déplaçant dans le même sens que le noeud source, seuls les noeuds N$_1$, 6 sont localisés en aval du noeud source S dans le sens de déplacement du noeud source S. Par conséquent, ils sont seuls candidats à l'élection du noeud de propagation dans le sens de déplacement du noeud source S. Bien que les noeuds 5 et 10 se déplacent dans le même sens que le noeud source S, ceux-ci ne sont pas candidats à l'élection étant donné qu'ils ne sont pas localisés devant le noeud source S dans le sens de déplacement du noeud source S.

Une procédure similaire permet de déterminer l'ensemble des noeuds candidats à l'élection du noeud de propagation N$_2$ dans le sens de déplacement opposé à celui du noeud source S. Pour cela, chaque noeud voisin N$_1$, N$_2$, 3, 4, 5, 6, 10 détermine s'il se déplace dans le sens opposé à celui du noeud source S (étape E$_{4033}$). Si tel est le cas, chaque noeud concerné N$_2$, 3, 4 détermine s'il est localisé devant le noeud source S dans le sens de déplacement opposé à celui du noeud source S (étape E$_{4034}$). Parmi les noeuds N$_2$, 3, 4, se déplaçant dans le sens opposé au noeud source S, seuls les noeuds N$_2$, 4 sont localisés en amont du noeud source S dans le sens de déplacement du noeud source S. Par conséquent, ils sont seuls candidats à l'élection du noeud de propagation N$_2$ dans le sens de déplacement opposé à celui du noeud source S.

Chaque noeud candidat sélectionné lors de l'étape de sélection précédente E$_{403}$, (à savoir N$_1$, N$_2$, 4, 6) détermine lors d'une deuxième étape de calcul E$_{404}$ la distance d'éloignement d$_i$ (à savoir respectivement d$_1$, d$_2$, d$_4$, d$_6$) qui le sépare du noeud source S, à partir de ses propres coordonnées géographiques instantanées et des coordonnées géographiques C$_n$ du noeud source S.

Lors d'une troisième étape de calcul E$_{405}$, chaque noeud candidat N$_1$, N$_2$, 4, 6 calcule un temps d'attente WT$_i$ (respectivement WT$_1$, WT$_2$, WT$_4$, WT$_6$) au bout duquel il est autorisé à émettre une requête de diffusion pour diffuser le paquet de données D.

Le temps d'attente WT$_i$ est calculé par chaque noeud candidat N$_1$, N$_2$, 4, 6 en fonction de sa distance d'éloignement respective d$_i$ (respectivement d$_1$, d$_2$, d$_4$, d$_6$) par rapport au noeud source S, selon l'équation suivante :

$$WT_i(d_i) = WT_{Max}\left(1 - \frac{\min\{d_i, R\}}{R}\right) \text{ (Équation 1)}$$

où WT$_i$ désigne le temps d'attente alloué au i$^{ème}$ noeud candidat ;
WT$_{Max}$ désigne un temps d'attente maximum allouable à un noeud candidat, tel que W$_{Max}$ = WT$_i$(d$_i$=0);
min { } désigne la fonction minimum ;
d$_i$ désigne la distance séparant le i$^{ème}$ candidat du noeud source S; et
R désigne la portée de transmission d'un noeud mobile.

Conformément à l'équation 1, la valeur du temps d'attente WT$_i$ calculée est d'autant plus faible que le noeud candidat est éloigné du noeud source S.

Ainsi, dans l'exemple de la figure 4, le noeud candidat $N_1$ étant plus éloigné que le noeud candidat 6 ($d_1>d_6$) par rapport au noeud source S, le noeud candidat $N_1$ calcule un temps d'attente $WT_1$ inférieur au temps d'attente $WT_6$ calculé par le noeud candidat 6. En effet, d'après l'équation 1, $WT_1=WT_{Max}(1-d_1/R) < WT_6=WT_{Max}(1-d_6/R)$.

De même, dans l'autre sens de propagation du paquet, le noeud candidat $N_2$ étant plus éloigné que le noeud candidat 4 ($d_2>d_4$), celui-ci $N_2$ calcule un temps d'attente $WT_2$ inférieur au temps d'attente $WT_4$ calculé par le noeud 4. En effet, d'après l'équation 1, $WT_2=WT_{Max}(1-d_2/R) < WT_4=WT_{Max}(1-d_4/R)$.

On notera que la position d'un noeud est inévitablement déterminée avec une incertitude inhérente au récepteur GPS. Ainsi, dans le cas où un noeud candidat se trouve à la périphérie de la zone de couverture du noeud source, au moment de la réception du paquet de données D, il est possible que la distance calculée $d_i$ par le noeud candidat soit légèrement supérieure à la portée de transmission R. Dans ce cas, l'équation 1 prévoit que le noeud candidat calcule un temps d'attente nul ($WT_i(d_j>R)=0$) pour lui permettre d'émettre immédiatement une requête de diffusion du paquet de données.

Dès qu'un noeud candidat a calculé la valeur de son temps d'attente, celui-ci active un compteur qui décompte le temps à partir de cette valeur, lors d'une étape de décompte $E_{406}$.

Dès que le temps d'attente d'un noeud candidat est écoulé (étape de test $E_{407}$ positive), ce noeud génère une requête de diffusion RTB (« Request To Broadcast ») dans laquelle il insère ses coordonnées géographiques courantes et antérieures, lors d'une étape de génération $E_{409}$. L'insertion des coordonnées courantes et antérieures permet au noeud récepteur de la requête de diffusion RTB de déterminer le sens de déplacement du noeud émetteur de ladite requête.

Lors d'une étape de diffusion $E_{410}$, le noeud candidat envoie au noeud source S la requête de diffusion RTB préalablement générée lors de l'étape $E_{409}$.

En réponse à cette requête de diffusion RTB, le noeud source S envoie au noeud candidat, un message d'autorisation de diffusion (« Clear To Broacast » ou commande de diffusion) du paquet de données D, en utilisant les coordonnées géographiques du noeud candidat contenues dans la requête RTB.

Dans l'exemple de la figure 4, le noeud source S envoie un message d'autorisation de diffusion CTB aux candidats $N_1$ et $N_2$ se déplaçant dans des sens opposés et qui sont les premiers noeuds candidats à avoir émis une requête de diffusion RTB.

Lors d'une étape de test $E_{411}$, le noeud candidat vérifie s'il a reçu le message d'autorisation CTB. Dès qu'un noeud candidat reçoit le message d'autorisation CTB en provenance du noeud source S, il insère ses coordonnées géographiques dans le paquet de données D à diffuser et incrémente la valeur de H telle que H=2, lors d'une étape d'insertion $E_{412}$ et, de ce fait, est élu noeud de propagation $N_1$, $N_2$ (étape $E_{413}$), ce qui marque la fin (étape $E_{414}$) de l'étape d'élection $E_4$ des noeuds de propagation.

L'émission de la requête de diffusion RTB par un noeud candidat au bout d'un temps d'attente qui est d'autant plus faible que l'éloignement de ce noeud par rapport au noeud source est élevé permet avantageusement d'élire de manière décentralisée des noeuds de propagation qui sont éloignés le plus possible du noeud source.

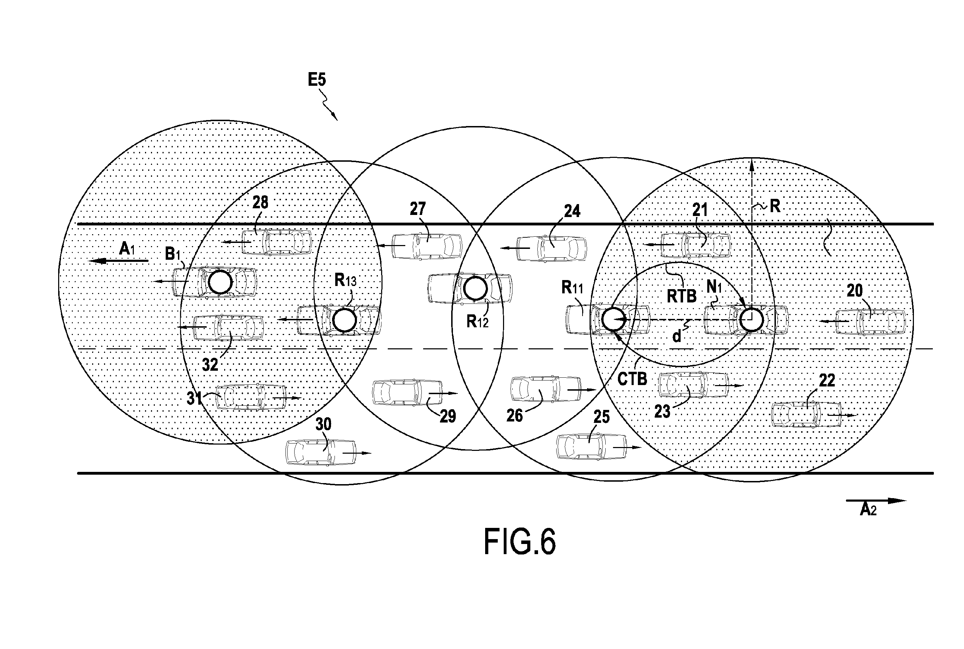

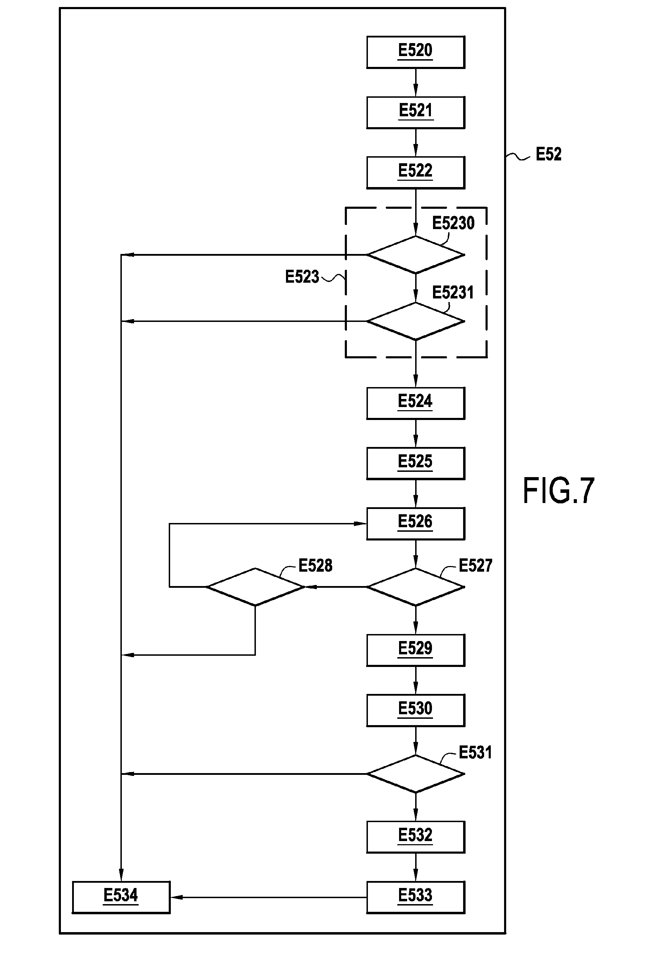

L'étape de propagation directionnelle dans un sens de déplacement du noeud de propagation $N_1$ (sens de déplacement du noeud source) va être maintenant décrite de manière détaillée en référence aux figures 6 et 7. Bien évidemment, cette description est directement transposable pour l'autre noeud de propagation $N_2$ se déplaçant dans le sens opposé.

Comme illustré sur la figure 6, le paquet de données D est propagé à partir du noeud de propagation $N_1$ puis relayé par un ensemble de noeuds relais élus successivement dans le sens de déplacement du noeud de propagation $N_1$ (sens de déplacement du noeud source S).

Le noeud de propagation $N_1$ élu lors de l'étape d'élection $E_4$, diffuse le paquet de données D à ses noeuds voisins 20, 21, 22, 23, $R_{11}$, lors de l'étape de diffusion $E_{50}$.

Sur réception (étape $E5_{20}$) du paquet de données D émis par le noeud de propagation $N_1$, chaque noeud voisin 20, 21, 22, 23, $R_{11}$ du noeud de propagation $N_1$ extrait du paquet de données D reçu les coordonnées géographiques $C_m$, $C_{m-1}$ du noeud de propagation $N_1$ ainsi que la valeur de la variable H, lors d'une étape d'extraction $E_{521}$. Etant donné que H=2, chaque noeud récepteur du paquet de données détermine que le paquet est reçu d'un noeud de propagation.

A partir des coordonnées géographiques $C_m$, $C_{m-1}$ du noeud de propagation $N_1$, chaque noeud voisin 20, 21, 22, 23, $R_{11}$ du noeud de propagation $N_1$ détermine le sens de déplacement du noeud propagation $N_1$ par rapport à son propre sens de déplacement, lors d'une première étape de calcul $E_{522}$.

Lors d'une étape de sélection $E_{523}$, chaque noeud voisin 20, 21, 22, 23, $R_{11}$ détermine s'il est un noeud candidat à l'élection d'un noeud relais.

Pour cela, chaque noeud voisin 20, 21, 22, 23, $R_{11}$ détermine s'il se déplace dans le même sens que le noeud de propagation $N_1$ (étape $E_{5230}$). Si tel est le cas, chaque noeud concerné 20, 21, $R_{11}$ détermine s'il est localisé devant le noeud de propagation $N_1$ par rapport au sens de déplacement du noeud propagation $N_1$ (étape $E_{5231}$). Parmi les

noeuds 20, 21, $R_{11}$ se déplaçant dans le même sens que le noeud de propagation $N_1$, seuls les noeuds 21, $R_{11}$ sont localisés en aval du noeud de propagation $N_1$ dans le sens de déplacement du noeud de propagation $N_1$. Par conséquent, les noeuds candidats à l'élection du noeud relais dans le sens de déplacement du noeud propagation $N_1$ sont les noeuds voisins 21 et $R_{11}$.

Chaque noeud candidat sélectionné lors de l'étape de sélection précédente $E_{523}$, détermine lors d'une deuxième étape de calcul $E_{524}$ la distance d'éloignement $d_i$ qui le sépare du noeud de propagation $N_1$, à partir de ses propres coordonnées géographiques instantanées et des coordonnées géographiques $C_m$ du noeud propagation $N_1$ extraites du paquet de données D.

Ainsi, dans l'exemple de la figure 6, chaque noeud candidat 21, $R_{11}$ calcule la distance d'éloignement $d_i$ qui le sépare du noeud propagation $N_1$ (respectivement $d_{21}$, $d_{11}$).

Lors d'une troisième étape de calcul $E_{525}$, chaque noeud candidat 21, $R_{11}$ calcule un temps d'attente $WT_i$ au bout duquel le noeud candidat est autorisé à émettre une requête de diffusion pour diffuser le paquet de données D.

Le temps d'attente $WT_i$ est calculé de la même manière que lors de l'étape $E_{405}$ relative à l'élection des noeuds de propagation telle que décrite ci-avant en référence à la figure 5. Ainsi, chaque noeud candidat 21, $R_{11}$ calcule son temps d'attente (respectivement $WT_{21}$, $WT_{11}$) en fonction de sa distance d'éloignement respective $d_i$ (respectivement $d_{11}$, $d_{21}$) par rapport au noeud de propagation $N_1$, selon l'équation 1.

Dans l'exemple de la figure 6, le noeud candidat $R_{11}$ étant plus éloigné que le noeud candidat 21 ($d_{11}>d_{21}$) par rapport au noeud de propagation $N_1$, celui-ci $R_{11}$ calcule un temps d'attente $WT_{11}$ inférieur au temps d'attente $WT_{21}$ calculé par le noeud 21. En effet, d'après l'équation 1, $WT_{11}=WT_{Max}(1-d_{11}/R) < WT_{21}=WT_{Max}(1-d_{21}/R)$.

Dès lors qu'un noeud candidat a calculé la valeur de son temps d'attente, celui-ci active un compteur qui décompte le temps à partir de cette valeur, lors d'une étape de décompte $E_{526}$. Tant que le temps d'attente n'est pas écoulé (étape de test $E_{527}$ négative) et qu'aucun noeud n'a été élu noeud relais (étape de test $E_{528}$ négative), chaque noeud candidat continue à décompter le temps.

Dès que le temps d'attente d'un noeud candidat est écoulé (étape de test $E_{527}$ positive), celui-ci génère une requête de diffusion RTB (« Request To Broadcast ») lors d'une étape de génération $E_{529}$. Lors d'une étape de diffusion $E_{530}$, le noeud candidat envoie la requête de diffusion au noeud de propagation $N_1$.

En réponse à cette requête de diffusion RTB, le noeud de propagation $N_1$ envoie au noeud candidat émetteur de la requête, un message d'autorisation de diffusion (« Clear To Broacast ») du paquet de données D.

Dans l'exemple de la figure 6, le noeud de propagation $N_1$ envoie un message d'autorisation CTB au candidat $R_{11}$ qui est le premier noeud à avoir émis une requête de diffusion RTB.

Lors d'une étape de test $E_{531}$, le noeud candidat vérifie s'il a reçu le message d'autorisation CTB en provenance du noeud de propagation $N_1$. Dès qu'il l'a reçu, le noeud candidat insère ses coordonnées géographiques dans le paquet de données à diffuser, lors d'une étape d'insertion $E_{532}$ et de ce fait il est élu noeud relais $R_{11}$ (étape $E_{533}$). Ceci marque la fin (étape $E_{534}$) de l'étape d'élection $E_{52}$ d'un noeud relais.

Dès qu'un noeud relais est élu lors de l'étape d'élection $E_{52}$, celui-ci diffuse le paquet de données D à tous ses noeuds voisins lors de l'étape de diffusion $E_{54}$.

Sur réception du paquet de données D, l'étape d'élection $E_{32}$ est réitérée, de sorte que les étapes $E_{520}$-$E_{534}$ déjà décrites en référence à la figure 7 sont exécutées au niveau de chaque noeud voisin du noeud relais, en vue d'élire un nouveau relais qui à son tour se charge de diffuser le paquet de données D.

Dans l'exemple de la figure 6, les étapes d'élection $E_{52}$ et de diffusion $E_{54}$ sont réitérées de manière à déterminer un ensemble de noeuds relais $R_{11}$, $R_{12}$, $R_{13}$, $B_1$ permettant d'acheminer le paquet de données D jusqu'à un noeud périphérique $B_1$.

Par exemple, le noeud relais courant $R_{11}$ envoie un message d'autorisation CTB au noeud $R_{12}$ qui devient le nouveau noeud relais, en réponse à une requête de diffusion RTB que le noeud $R_{12}$ a envoyée lors de l'étape d'envoi $E_{530}$.

Si le noeud relais courant ne reçoit pas de requête de diffusion RTB pendant un intervalle de temps prédéterminé, le noeud relais courant est un noeud périphérique du groupe de noeuds considéré. C'est précisément le cas du noeud $B_1$ qui se trouve en périphérie du groupe de noeuds. Après avoir diffusé le paquet de données lors de l'étape de diffusion $E_{54}$, le noeud $B_1$ ne reçoit aucune requête de diffusion RTB étant donné qu'aucun noeud ne se trouve devant lui.

Les groupes de noeuds mobiles se forment et se désintègrent naturellement et dynamiquement au cours de temps, en fonction des déplacements de chaque noeud du réseau ad-hoc.

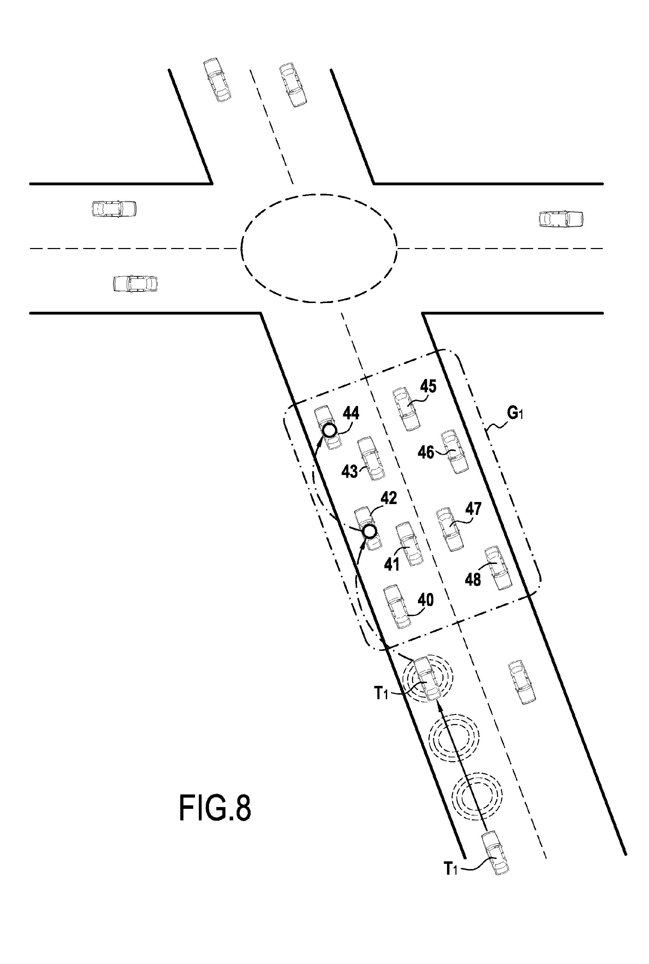

Afin de transmettre le paquet de données à d'autres groupes de noeuds, le procédé selon l'invention prévoit une phase de diffusion inter-groupe $P_2$ qui va être maintenant décrite de manière détaillée en référence aux figures 8, 9 et 10.

Dès qu'un noeud périphérique $B_1$, $B_2$ porteur du paquet de données quitte un groupe de noeuds, celui-ci devient un noeud de transport $T_1$, $T_2$ (étape initiale $E_{10}$ de la phase de diffusion inter-groupe $P_2$) qui est destiné à transmettre au cours de son déplacement le paquet de données D à au moins un autre groupe.

Pour cela, chaque noeud de transport garde en mémoire le paquet de données D et le diffuse à intervalles de temps réguliers au cours de son déplacement.

L'intervalle de temps entre deux diffusions successives effectuées par un noeud de transport est ajusté de manière dynamique en fonction de la vitesse de déplacement de ce noeud, de sorte que l'intervalle de temps est d'autant plus faible que la vitesse du noeud est élevée. Ainsi, une diminution de la vitesse du noeud de transport due par exemple à la présence d'un obstacle (par exemple un feu rouge en environnement urbain) a pour effet de retarder la prochaine diffusion du paquet de données. Un noeud diffuse le paquet de données d'autant moins fréquemment qu'il se déplace lentement.

De manière avantageuse, cela permet d'assurer une couverture continue de l'espace par le noeud de transport au cours de son déplacement, tout en évitant de diffuser trop fréquemment le paquet de données ce qui aurait pour effet de surcharger inutilement la bande passante allouée au réseau.

Dans l'exemple de la figure 8, on suppose que le noeud périphérique $B_1$ s'est détaché du groupe de noeuds G auquel il appartenait et qu'il se déplace en direction d'un autre groupe de noeuds $G_1$ le long d'une voie de circulation. N'étant rattaché à aucun groupe, le noeud périphérique $B_1$ acquiert donc le statut de noeud de transport $T_1$ lors de l'étape initiale $E_{10}$ de la phase de diffusion inter-groupe $P_2$.

Dans cet exemple, on considère que lorsqu'un noeud périphérique $B_1$, $B_2$ porteur du paquet de données quitte un groupe de noeuds, celui-ci devient un noeud de transport $T_1$, $T_2$ destiné à transmettre au cours de son déplacement le paquet de données D à au moins un autre groupe de noeuds L'acquisition du statut de noeud de transport s'effectue lors d'une étape initiale $E_{10}$ de la phase de diffusion inter-groupe $P_2$. Pour un noeud de transport, la valeur de la variable H est H=2, car cette variable a déjà été incrémentée une fois lors de la diffusion du paquet de données D par le noeud source, et une fois lors de la diffusion du paquet de données D par un noeud de propagation.

Lorsqu'un noeud a acquis le statut de noeud de transport, il détermine lors d'une étape de test $E_{12}$, si son sens de déplacement a récemment changé et par conséquent s'il a changé de voie de circulation depuis l'instant où il a acquis le statut de noeud de transport.

De manière connue, chaque noeud est apte à mémoriser son propre parcours au moyen de son dispositif de navigation embarqué et par conséquent il est apte à déterminer son sens de déplacement actuel et à le comparer avec son sens de déplacement à un instant antérieur.

Dans le cas où le noeud de transport détermine un changement de son sens de déplacement lors de l'étape de test $E_{12}$, il met à jour la variable H dans le paquet de données D en lui affectant la valeur H=1, lors d'une étape de mise à jour $E_{14}$. Le fait que H= 1 indique que le noeud de transport acquiert le statut de noeud source conformément à l'invention.

Lors d'une étape de diffusion périodique $E_{16}$, le noeud de transport diffuse le paquet de données qui est éventuellement reçu par des noeuds voisins du noeud de transport.

Dans le cas où le noeud de transport ne détermine aucun changement de son sens de déplacement lors de l'étape de test $E_{12}$, il procède directement à l'étape de diffusion périodique $E_{16}$. Dans ce cas, la variable H garde sa valeur égale à 2, et le noeud de transport joue alors le rôle d'un noeud de propagation conformément à l'invention.

Suite à la diffusion du paquet de données, lorsqu'un noeud récepteur d'un paquet de données (noeud voisin du noeud de transport) reçoit ledit paquet, il en extrait la valeur de la variable H et les coordonnées géographiques courantes et antérieures du noeud émetteur.

Si H=1, alors cela signifie que le paquet de données est directement reçu d'un noeud émetteur ayant le statut de noeud source. Dans ce cas, le noeud récepteur envoie une requête de diffusion RTB au noeud émetteur à condition qu'il soit localisé :

- en aval du noeud émetteur (noeud source) par rapport au sens de déplacement du noeud émetteur et qu'il se déplace dans le même sens que le noeud émetteur ; ou
- en amont du noeud émetteur (noeud source) par rapport au sens de déplacement du noeud émetteur et qu'il se déplace dans le sens opposé au sens de déplacement dudit noeud émetteur.

Le noeud récepteur génère et diffuse une requête de diffusion RTB dans laquelle il insère son sens de déplacement (ou de manière alternative, ses coordonnées courantes et antérieures permettant de déterminer son sens de déplacement).

Si H=2, alors cela signifie que le paquet de données est directement reçu d'un noeud émetteur ayant le statut de noeud de propagation. Dans ce cas, le noeud récepteur envoie une requête de diffusion RTB au noeud émetteur, à condition qu'il se déplace dans le même sens que le noeud émetteur et qu'il soit localisé devant le noeud émetteur par rapport au sens de déplacement du noeud émetteur.

Lors d'une étape de vérification $E_{18}$, le noeud de transport détermine s'il a reçu des requêtes de diffusion RTB émises par des noeuds voisins, en réponse à la réception du paquet de données D diffusé par le noeud de transport lors de l'étape de diffusion périodique $E_{16}$.

Dans le cas où le noeud de transport ne reçoit aucune requête de diffusion au bout d'une durée prédéterminée, celui-ci réitère les étapes de test $E_{12}$, de diffusion $E_{16}$ et éventuellement de mise à jour $E_{14}$ déjà décrites, ces étapes étant réitérées tant que le noeud de transport ne reçoit pas de requête de diffusion d'un noeud voisin. Ainsi, le noeud de transport garde en mémoire le paquet de données D et le diffuse à intervalles de temps réguliers au cours de son déplacement jusqu'à ce qu'il soit reçu par au moins un noeud voisin.

L'intervalle de temps entre deux diffusions successives effectuées par un noeud de transport est ajusté de manière dynamique en fonction de la vitesse de déplacement de ce noeud.

Lorsqu'un noeud de transport reçoit une requête de diffusion d'un noeud voisin, il l'autorise à diffuser le paquet de données en lui adressant une commande de diffusion CTB.

Dans le cas où le noeud de transport joue le rôle de noeud source (H=1) et qu'il reçoit des requêtes de diffusion RTB, il envoie (étape $E_{20}$) une commande de diffusion CTB aux deux premiers noeuds ayant émis une requête RTB et se déplaçant selon des sens opposés. Ainsi, le noeud de transport ayant acquis le statut de nouveau noeud source permet l'élection de deux noeuds de propagation conformément à l'invention. Le paquet de données est ensuite diffusé simultanément dans les sens de déplacement respectifs de chaque nouveau noeud de propagation, selon l'étape de propagation directionnelle $E_5$ décrite ci-avant.

Dans le cas où le noeud de transport joue le rôle de noeud de propagation (H=2) et qu'il reçoit une requête de diffusion RTB, il envoie (étape $E_{22}$) une commande de diffusion CTB au noeud ayant émis une requête RTB.

Ainsi, le noeud de transport $T_1$ ayant acquis le statut de nouveau noeud de propagation correspond à un noeud périphérique $B_1$ (non représenté sur la figure 8) qui s'est détaché du groupe de noeuds G (non représenté sur la figure 8) auquel il appartenait et qui se déplace en direction d'un autre groupe de noeuds $G_1$ le long d'une voie de circulation. N'étant rattaché à aucun groupe, le noeud périphérique $B_1$ acquiert le statut de noeud de transport $T_1$ lors de l'étape initiale $E_{10}$ de la phase de diffusion inter-groupe $P_2$.

Lors de la phase de test $E_{12}$, le noeud de transport $T_1$ ne détecte aucun changement de son sens de déplacement. Par conséquent, il diffuse le paquet de données D avec la variable H=2, lors de l'étape de diffusion $E_{16}$.

Le noeud de transport $T_1$ réitère l'ensemble des étapes de test $E_{12}$ et de diffusion $E_{16}$ et éventuellement $E_{14}$, jusqu'à ce qu'il arrive au niveau d'un groupe de noeuds $G_1$ qu'il intègre. Comme illustré sur la figure 8, on suppose à titre d'exemple que le noeud de transport $T_1$ effectue successivement trois diffusions (illustrées par les cercles pointillés concentriques sur la figure 8) au cours de son déplacement jusqu'à ce qu'il transmette le paquet de données à des noeuds voisins 40, 41, 42, 47, 48 appartenant au groupe $G_1$.

Sur réception du paquet de données D, les noeuds voisins 40, 41, 47, 48 obtiennent à partir du paquet de données reçu D, la valeur de la variable H=2 et le sens de déplacement du noeud de transport $T_1$.

Seuls les noeuds 40, 41, 42 qui se déplacent dans le même sens que le noeud de transport $T_1$ et qui se trouvent devant lui génèrent une requête de diffusion RTB. Dans cet exemple, le noeud 42 est le premier noeud à émettre une requête RTB à destination du noeud de transport $T_1$ étant donné qu'il est le plus éloigné (tout en étant à portée) du noeud de transport $T_1$.

Lors de l'étape $E_{22}$, le noeud de transport $T_1$ émet un message d'autorisation de diffusion (ou commande de diffusion) au noeud 42 qui est élu en tant que noeud relais.

Le paquet de données D est ensuite diffusé au sein du groupe $G_1$ jusqu'à ce que le paquet soit reçu par un noeud périphérique 44 du groupe $G_1$ conformément à l'étape de propagation directionnelle $E_5$ décrite ci-avant.

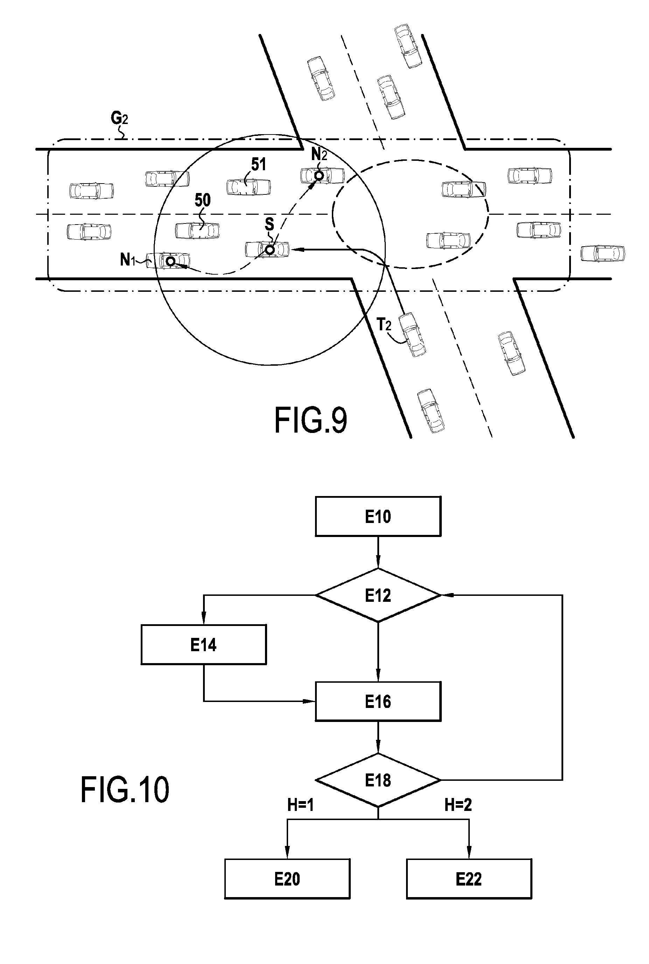

Selon le scénario illustré sur la figure 9, un noeud de transport $T_2$ intègre un groupe $G_2$ suite à un changement de direction, dans lequel il s'intègre en tant que noeud source S.

Lors de l'étape de test $E_{12}$, le noeud de transport $T_2$ détermine que son sens de déplacement a changé suite à un changement de voie de circulation.

Lors de l'étape de mise à jour $E_{14}$, le noeud de transport $T_2$ met à jour la variable H à la valeur 1 (H=1) dans le paquet de données D indiquant qu'il joue désormais le rôle de noeud source S.

Lors de l'étape de diffusion $E_{16}$, le noeud de transport $T_2$ diffuse le paquet de données D en tant que noeud source S.

Sur réception du paquet de données D, les noeuds voisins $N_1$, $N_2$, 50, 51 du noeud source S obtiennent à partir du paquet de données reçu D, la valeur de la variable H=1 et le sens de déplacement du noeud de transport $T_2$.

Dans le sens de déplacement du noeud source S, le noeud voisin $N_1$ est élu noeud de propagation étant donné qu'il est le plus éloigné devant le noeud source S. Dans le sens de déplacement opposé à celui du noeud source S, le noeud voisin $N_2$ est élu noeud de propagation étant donné qu'il est le plus éloigné derrière le noeud source S.

Les deux noeuds de propagation $N_1$ et $N_2$ sont élus conformément à l'étape d'élection $E_4$ déjà décrite. Les noeuds $N_1$ et $N_2$ sont les deux premiers noeuds à envoyer une requête de diffusion au noeud source S qui en réponse leur transmet un message d'autorisation de diffusion (ou commande de diffusion).

Le paquet de données est ensuite propagé simultanément dans le sens de déplacement de chaque noeud de propagation selon l'étape de propagation directionnelle $E_5$ déjà décrite, jusqu'à ce qu'il atteigne la périphérie du groupe $G_2$ lors de l'étape $E_6$ déjà décrite.

L'exemple ci-dessus a considéré le cas où un noeud périphérique se détache d'un groupe pour en intégrer un autre. De manière alternative, on peut considérer le cas où le noeud périphérique reste attaché au groupe jusqu'à la fusion de ce groupe avec un autre groupe. Dans ce cas, le noeud périphérique diffuse le paquet de données à intervalles de temps réguliers au cours de son déplacement lors de l'étape de diffusion périodique $E_{12}$, jusqu'à ce que le paquet de données soit reçu par des noeuds mobiles de cet autre groupe. Ainsi, le noeud périphérique joue le rôle d'un noeud de transport qui diffuse le paquet jusqu'à la fusion des deux groupes.

On notera que l'appareil de navigation embarqué sur chaque noeud mobile comprend des moyens de traitement logiciels aptes à effectuer de manière autonome et décentralisée, les étapes et sous-étapes relatives à l'élection d'un noeud de propagation ou d'un noeud relais telles que décrites ci-avant lors de la phase de diffusion intra-groupe $P_1$ ainsi que les étapes relatives à la phase de diffusion inter-groupe $P_2$.

En particulier, l'équation 1 prévue pour déterminer le temps d'attente de chaque noeud candidat à l'élection est programmée et sauvegardée dans une mémoire de l'appareil de navigation embarqué.

Le terminal de communication sans fil de chaque noeud mobile comprend des moyens d'émission et de réception permettant à chaque noeud de diffuser et de recevoir les paquets de données, les requêtes de diffusion et les messages d'autorisation de diffusion.

## Revendications

1. Procédé de diffusion d'au moins un paquet de données (D) dans un réseau comprenant un ensemble de groupes ($G_1$, $G_2$, $G_3$, $G_4$, G) de noeuds mobiles, ledit procédé comprenant une phase de diffusion intra-groupe ($P_1$), lors de laquelle au moins un paquet de données (D) est diffusé aux noeuds mobiles appartenant à un même groupe (G), ladite phase de diffusion intra-groupe ($P_1$) comprenant une étape de diffusion initiale ($E_3$), lors de laquelle un noeud source (S) diffuse ($E_3$) ledit au moins un paquet de données (D) à un ensemble de noeuds voisins ($N_1$, $N_2$, 3, 4, 5, 6, 10) ledit procédé étant **caractérisé en ce que** ladite phase de diffusion intra-groupe ($P_1$) comprend en outre :

   - une étape d'élection ($E_4$) de deux noeuds de propagation ($N_1$, $N_2$) se déplaçant en sens opposés et localisés de chaque côté du noeud source (S), lors de laquelle un premier noeud voisin dudit noeud source (S) est élu premier noeud de propagation ($N_1$) à condition qu'il soit localisé en aval du noeud source (S) par rapport au sens de déplacement du noeud source (S) et qu'il se déplace dans le même sens que le noeud source (S) et lors de laquelle un deuxième noeud voisin dudit noeud source (S) est élu deuxième noeud de propagation ($N_2$), à condition qu'il soit localisé en amont du noeud source (S) par rapport au sens de déplacement du noeud source (S) et qu'il se déplace dans le sens opposé au sens de déplacement dudit noeud source (S).

2. Procédé selon la revendication 1, **caractérisé en ce que** ladite phase de diffusion intra-groupe ($P_1$) comprend en outre une étape de propagation directionnelle ($E_5$), au cours de laquelle chaque noeud de propagation élu ($N_1$, $N_2$) transmet le paquet de données (D) à un noeud relais ($R_{11}$; 42) se déplaçant dans le même sens que le noeud de propagation ($N_1$) et situé en aval dudit noeud de propagation par rapport au sens de déplacement ($A_1$) du noeud de propagation.

3. Procédé selon la revendication 2, **caractérisé en ce que** l'étape de propagation directionnelle ($E_5$) comprend en outre au moins :

   - une diffusion ($E_{54}$), lors de laquelle un noeud relais courant diffuse le paquet de données (D) à ses noeuds voisins, et
   - une élection ($E_{52}$), lors de laquelle un noeud relais suivant se déplaçant dans le même sens que le noeud relais courant et situé en aval dudit noeud relais courant par rapport au sens de déplacement du noeud relais courant est élu parmi les noeuds voisins dudit noeud relais courant, lesdites étapes de diffusion ($E_{54}$) et d'élection ($E_{52}$) étant répétées jusqu'à ce qu'un noeud élu soit un noeud périphérique dudit groupe ($E_6$).

4. Procédé selon la revendication 1, **caractérisé en ce qu'**il comprend en outre une phase de diffusion inter-groupe ($P_2$), lors de laquelle le paquet de données (D) est transmis à un autre groupe de noeuds ($G_1$, $G_2$) par l'intermédiaire d'un noeud de transport ($T_1$; $T_2$) diffusant au cours de son déplacement le paquet de données à intervalles de temps réguliers lors d'une étape de diffusion périodique ($E_{16}$), jusqu'à ce que ledit noeud de transport ($T_1$ ; $T_2$) reçoive au moins une requête de diffusion (RTB) dudit paquet (D) émise par au moins un autre noeud mobile (42 ; $N_1$, $N_2$).

5. Procédé selon la revendication 4, **caractérisé en ce que** l'intervalle de temps entre deux itérations successives de l'étape de diffusion périodique ($E_{16}$) est déterminé par le noeud de transport ($T_1$) en fonction de sa vitesse de déplacement.

**6.** Procédé selon la revendication 4, **caractérisé en ce que**, la phase de diffusion inter-groupe ($P_2$) comprend en outre :

- une étape de test $E_{12}$, lors de laquelle ledit noeud de transport ($T_1$; $T_2$) détermine si son sens de déplacement a changé depuis la dernière diffusion du paquet par ledit noeud, et:
- dans la négative, il ($T_1$) acquiert le statut de noeud de propagation et envoie une commande de diffusion (CTB) dudit paquet (D) à un noeud voisin (42) en réponse à une requête de diffusion émise par ledit noeud voisin (42) ;
- dans l'affirmative, il ($T_2$) acquiert le statut de noeud source (S) et envoie une commande de diffusion (CTB) dudit paquet (D) à deux noeuds voisins ($N_1$, $N_2$) en réponse à une requête de diffusion émise par les noeuds voisins.

**7.** Procédé selon l'une quelconque des revendications 1 à 6, **caractérisé en ce qu'**il comprend en outre :

- une étape de réception par un des noeuds de propagation d'un paquet de données ;
- une étape de détermination d'un temps d'attente, en fonction d'une distance séparant ledit noeud de propagation du noeud source émetteur dudit paquet.

**8.** Procédé selon la revendication 7, **caractérisé en ce qu'**il comprend en outre :

- une étape de commande à l'issue dudit temps d'attente, des moyens d'émission d'une requête de diffusion dudit paquet vers ledit noeud source ;
- une étape de commande sur réception d'une commande de diffusion dudit paquet, des moyens de diffusion dudit paquet reçu ;
- une étape de diffusion du paquet de données à intervalles de temps réguliers jusqu'à la réception d'au moins une requête de diffusion dudit paquet d'au moins un autre noeud mobile ; et
- une étape d'envoi d'une commande de diffusion (CTB) dudit paquet (D) à au moins un noeud mobile (42) ayant émis l'une desdites requêtes de diffusion (RTB) reçues.

**9.** Système de diffusion d'au moins un paquet de données (D) comprenant un ensemble de groupes ($G_1$, $G_2$, $G_3$, $G_4$, G) de noeuds mobiles formant un réseau, ledit système étant **caractérisé en ce qu'**un groupe (G) de noeuds comprend:

- un noeud source (S) diffusant ledit au moins un paquet de données (D) à un ensemble de noeuds voisins ($N_1$, $N_2$, 3, 4, 5, 6, 10) au sein dudit groupe (G) de noeuds;
- deux noeuds de propagation ($N_1$, $N_2$) se déplaçant en sens opposés et localisés de chaque côté du noeud source (S), un premier noeud voisin dudit noeud source (S) étant élu premier noeud de propagation ($N_1$) à condition qu'il soit localisé en aval du noeud source (S) par rapport au sens de déplacement du noeud source (S) et qu'il se déplace dans le même sens que le noeud source (S) et un deuxième noeud voisin dudit noeud source (S) étant élu deuxième noeud de propagation ($N_2$), à condition qu'il soit localisé en amont du noeud source (S) par rapport au sens de déplacement du noeud source (S) et qu'il se déplace dans le sens opposé au sens de déplacement dudit noeud source (S), chaque noeud de propagation diffusant le paquet de données.

**10.** Système selon la revendication 9, **caractérisé en ce qu'**un groupe de noeuds comprend en outre:

- au moins un noeud relais ($R_{11}$, $R_{12}$, $R_{13}$ ; 42) se déplaçant dans le même sens qu'un desdits noeuds de propagation ($N_1$) et situé en aval dudit noeud de propagation par rapport au sens de déplacement du noeud de propagation ;
- au moins un noeud de transport ($T_1$; $T_2$), situé en périphérie du groupe de noeuds, adapté à recevoir ledit paquet de données d'un desdits noeuds de propagation ou d'un desdits noeuds relais et à transmettre le paquet de données à un autre groupe de noeuds dudit système.

**11.** Système selon la revendication 9 ou 10, **caractérisé en ce que** chaque noeud de propagation comprend :

- des moyens de réception d'un paquet de données ;
- des moyens de détermination d'un temps d'attente ($WT_i$), en fonction d'une distance ($d_i$) séparant le noeud de propagation du noeud source émetteur dudit paquet.

**12.** Système selon la revendication 11, **caractérisé en ce que** chaque noeud de propagation comprend en outre :

- des moyens pour commander, à l'issue dudit temps d'attente ($WT_i$), des moyens d'émission d'une requête de diffusion (RTB) dudit paquet (D) vers ledit noeud source ;
- des moyens pour commander, sur réception d'une commande de diffusion (CTB) dudit paquet, des moyens de diffusion dudit paquet (D) reçu ;
- des moyens pour diffuser le paquet de données à intervalles de temps réguliers jusqu'à réception d'au moins une requête de diffusion (RTB) dudit paquet d'au moins un autre noeud mobile ;
- des moyens pour envoyer une commande de diffusion (CTB) dudit paquet (D) à au moins un noeud mobile (42) ayant émis l'une desdites requêtes de diffusion (RTB) reçues.

**Patentansprüche**

1. Verfahren zum Verteilen mindestens eines Datenpakets (D) in einem Netz, umfassend eine Gesamtheit von Gruppen ($G_1$, $G_2$, $G_3$, $G_4$, G) von mobilen Knoten, wobei das Verfahren eine Verteilungsphase innerhalb einer Gruppe ($P_1$) umfasst, bei der mindestens ein Datenpaket (D) an die mobilen Knoten verteilt wird, die einer selben Gruppe (G) angehören, wobei die Verteilungsphase innerhalb einer Gruppe ($P_1$) einen Anfangsverteilungsschritt ($E_3$) umfasst, bei dem ein Quellenknoten (S) das mindestens eine Datenpaket (D) an eine Gesamtheit von benachbarten Knoten ($N_1$, $N_2$, 3, 4, 5, 6, 10) verteilt ($E_3$), wobei das Verfahren **dadurch gekennzeichnet ist, dass** die Verteilungsphase innerhalb einer Gruppe ($P_1$) ferner Folgendes umfasst:

   - einen Auswahlschritt ($E_4$) von zwei Ausbreitungsknoten ($N_1$, $N_2$), die sich in entgegengesetzte Richtungen bewegen und auf jeder Seite des Quellenknotens (S) lokalisiert sind, bei dem ein erster benachbarter Knoten des Quellenknotens (S) als erster Ausbreitungsknoten ($N_1$) ausgewählt wird, sofern er stromabwärts zu dem Quellenknoten (S) in Bezug auf die Bewegungsrichtung des Quellenknotens (S) lokalisiert ist und sich in dieselbe Richtung wie der Quellenknoten (S) bewegt, und bei dem ein zweiter benachbarter Quellenknoten (S) als zweiter Ausbreitungsknoten ($N_2$) ausgewählt wird, sofern er stromaufwärts zu dem Quellenknoten (S) in Bezug auf die Bewegungsrichtung des Quellenknotens (S) lokalisiert ist und sich in die entgegengesetzte Richtung zur Bewegungsrichtung des Quellenknotens (S) bewegt.

2. Verfahren nach Anspruch 1, **dadurch gekennzeichnet, dass** die Verteilungsphase innerhalb einer Gruppe ($P_1$) ferner einen Schritt der Richtungsausbreitung ($E_5$) umfasst, während dessen jeder ausgewählte Ausbreitungsknoten ($N_1$, $N_2$) das Datenpaket (D) an einen Relaisknoten ($R_{11}$; 42) überträgt, der sich in dieselbe Richtung wie der Ausbreitungsknoten ($N_1$) bewegt und sich stromabwärts zu dem Ausbreitungsknoten in Bezug auf die Bewegungsrichtung ($A_1$) des Ausbreitungsknotens befindet.

3. Verfahren nach Anspruch 2, **dadurch gekennzeichnet, dass** der Schritt der Richtungsausbreitung ($E_5$) ferner mindestens Folgendes umfasst:

   - eine Verteilung ($E_{54}$), bei der ein laufender Relaisknoten das Datenpaket (D) an seine benachbarten Knoten verteilt, und
   - eine Auswahl ($E_{52}$), bei der ein folgender Relaisknoten, der sich in dieselbe Richtung wie der laufende Relaisknoten bewegt und stromabwärts zu dem laufenden Relaisknoten in Bezug auf die Bewegungsrichtung des laufenden Relaisknotens bewegt, unter den benachbarten Knoten des laufenden Relaisknotens ausgewählt wird, wobei die Schritte der Verteilung ($E_{54}$) und Auswahl ($E_{52}$) wiederholt werden, bis ein ausgewählter Knoten ein Peripherieknoten der Gruppe ($E_6$) ist.

4. Verfahren nach Anspruch 1, **dadurch gekennzeichnet, dass** es ferner eine Verteilungsphase innerhalb einer Gruppe ($P_2$) umfasst, bei der das Datenpaket (D) an eine andere Gruppe von Knoten ($G_1$, $G_2$) mit Hilfe eines Transportknotens ($T_1$; $T_2$) übertragen wird, der während seiner Bewegung das Datenpaket in regelmäßigen Zeitabständen während eines periodischen Verteilungsschrittes ($E_{16}$) verteilt, bis der Transportknoten ($T_1$; $T_2$) mindestens einen Antrag auf Verteilung (RTB) des von mindestens einem anderen mobilen Knoten (42; $N_1$, $N_2$) gesandten Pakets (D) erhält.

5. Verfahren nach Anspruch 4, **dadurch gekennzeichnet, dass** das Zeitintervall zwischen zwei aufeinanderfolgenden Iterationen des periodischen Verteilungsschrittes ($E_{16}$) durch den Transportknoten ($T_1$) in Abhängigkeit von seiner Bewegungsgeschwindigkeit bestimmt wird.

6. Verfahren nach Anspruch 4, **dadurch gekennzeichnet, dass** die Verteilungsphase innerhalb einer Gruppe ($P_2$)

ferner Folgendes umfasst:

- einen Testschritt (E$_{12}$), bei dem der Transportknoten (T$_1$; T$_2$) bestimmt, ob sich seine Bewegungsrichtung seit der letzten Verteilung des Pakets durch den Knoten geändert hat; und:
- falls nicht, dieser (T$_1$) den Status eines Ausbreitungsknotens erwirbt und einen Befehl zur Verteilung (CTB) des Pakets (D) an einen benachbarten Knoten (42) als Antwort auf einen Verteilungsantrag, der von dem benachbarten Knoten (42) gesandt wurde, sendet;
- falls ja, dieser (T$_2$) den Status eines Quellenknotens (S) erwirbt und einen Befehl zur Verteilung (CTB) des Pakets (D) an zwei benachbarte Knoten (N$_1$, N$_2$) als Antwort auf einen von den benachbarten Knoten gesandten Verteilungsantrag sendet.

7. Verfahren nach einem der Ansprüche 1 bis 6, **dadurch gekennzeichnet, dass** es ferner Folgendes umfasst:

- einen Schritt des Erhalts eines Datenpakets durch einen der Ausbreitungsknoten;
- einen Schritt der Bestimmung einer Wartezeit in Abhängigkeit von einem Abstand zwischen dem Ausbreitungsknoten und dem Quellenknoten, der das Paket sendet.

8. Verfahren nach Anspruch 7, **dadurch gekennzeichnet, dass** es ferner Folgendes umfasst:

- nach der Wartezeit einen Schritt der Steuerung der Mittel zum Senden eines Antrags auf Verteilung des Pakets zu dem Quellenknoten;
- bei Erhalt eines Befehls zur Verteilung des Pakets einen Schritt der Steuerung der Mittel zur Verteilung des erhaltenen Pakets;
- einen Verteilungsschritt des Datenpakets in regelmäßigen Zeitabständen bis zum Erhalt mindestens eines Antrags auf Verteilung des Pakets mindestens eines weiteren mobilen Knotens; und
- einen Schritt des Sendens eines Befehls zur Verteilung (CTB) des Pakets (D) an mindestens einen mobilen Knoten (42), der einen der erhaltenen Verteilungsanträge (RTB) gesandt hat.

9. System zur Verteilung mindestens eines Datenpakets (D), umfassend eine Gesamtheit von Gruppen (G$_1$, G$_2$, G$_3$, G$_4$, G) von mobilen Knoten, die ein Netz bilden, wobei das System **dadurch gekennzeichnet ist, dass** eine Gruppe (G) von Knoten Folgendes umfasst:

- einen Quellenknoten (S), der das mindestens eine Datenpaket (D) an eine Gesamtheit von benachbarten Knoten (N$_1$, N$_2$, 3, 4, 5, 6, 10) innerhalb der Gruppe (G) von Knoten verteilt;
- zwei Ausbreitungsknoten (N$_1$, N$_2$), die sich in entgegengesetzte Richtungen bewegen und auf jeder Seite des Quellenknotens (S) lokalisiert sind, wobei ein erster benachbarter Knoten des Quellenknotens (S) als erster Ausbreitungsknoten (N$_1$) ausgewählt wird, sofern er stromabwärts zu dem Quellenknoten (S) in Bezug auf die Bewegungsrichtung des Quellenknotens (S) lokalisiert ist und sich in dieselbe Richtung wie der Quellenknoten (S) bewegt, und ein zweiter benachbarter Knoten des Quellenknotens (S) als zweiter Ausbreitungsknoten (N$_2$) ausgewählt wird, sofern er stromaufwärts zu dem Quellenknoten (S) in Bezug auf die Bewegungsrichtung des Quellenknotens (S) lokalisiert ist und sich in die entgegengesetzte Richtung zur Bewegungsrichtung des Quellenknotens (S) bewegt, wobei jeder Ausbreitungsknoten das Datenpaket verteilt.

10. System nach Anspruch 9, **dadurch gekennzeichnet, dass** eine Gruppe von Knoten ferner Folgendes umfasst:

- mindestens einen Relaisknoten (R$_{11}$, R$_{12}$, R$_{13}$; 42), der sich in dieselbe Richtung wie einer der Ausbreitungsknoten (N$_1$) bewegt und sich stromabwärts zu dem Ausbreitungsknoten in Bezug auf die Bewegungsrichtung des Ausbreitungsknotens befindet;
- mindestens einen Transportknoten (T$_1$; T$_2$), der sich an der Peripherie der Gruppe von Knoten befindet und dazu vorgesehen ist, das Datenpaket von einem der Ausbreitungsknoten oder einem der Relaisknoten zu erhalten und das Datenpaket an eine weitere Gruppe von Knoten des Systems zu übertragen.

11. System nach Anspruch 9 oder 10, **dadurch gekennzeichnet, dass** jeder Ausbreitungsknoten Folgendes umfasst:

- Mittel zum Erhalt eines Datenpakets;
- Mittel zur Bestimmung einer Wartezeit (WT$_i$) in Abhängigkeit von einem Abstand (d$_i$) zwischen dem Ausbreitungsknoten und dem das Paket sendenden Quellenknoten.

**12.** System nach Anspruch 11, **dadurch gekennzeichnet, dass** jeder Ausbreitungsknoten ferner Folgendes umfasst:

- Mittel, um nach der Wartezeit ($WT_i$) Mittel zum Senden eines Antrags auf Verteilung (RTB) des Pakets (D) zu dem Quellenknoten zu steuern;
- Mittel, um bei Erhalt eines Befehls zur Verteilung (CTB) des Pakets Mittel zur Verteilung des erhaltenen Pakets (D) zu steuern;
- Mittel, um das Datenpaket in regelmäßigen Zeitabständen bis zum Erhalt mindestens eines Antrags auf Verteilung (RTB) des Pakets mindestens eines weiteren mobilen Knotens zu verteilen;
- Mittel, um einen Befehl zur Verteilung (CTB) des Pakets (D) an mindestens einen mobilen Knoten (42), der einen der erhaltenen Verteilungsanträge (RTB) gesandt hat, zu senden.

**Claims**

**1.** Method for distributing at least one data packet (D) in a network comprising a set of groups ($G_1$, $G_2$, $G_3$, $G_4$, G) of mobile nodes, said method including an intra-group distribution phase ($P_1$), during which at least one data packet (D) is distributed to the mobile nodes belonging to the same group (G), said intra-group distribution phase ($P_1$) including an initial distribution step ($E_3$) during which a source node (S) distributes ($E_3$) said at least one data packet (D) to a set of neighbouring nodes ($N_1$, $N_2$, 3, 4, 5, 6, 10), said method being **characterized in that** said intra-group distribution phase ($P_1$) furthermore includes:

- a step of choosing ($E_4$) two propagation nodes ($N_1$, $N_2$) moving in opposite directions and located on each side of the source node (S), during which a first neighbouring node of said source node (S) is chosen as the first propagation node ($N_1$), provided that it is located downstream of the source node (S) in relation to the direction of movement of the source node (S) and that it moves in the same direction as the source node (S) and during which a second neighbouring node of said source node (S) is chosen as the second propagation node ($N_2$), provided that it is located upstream of the source node (S) in relation to the direction of movement of the source node (S) and that it moves in the opposite direction to the direction of movement of said source node (S).

**2.** Method according to Claim 1, **characterized in that** said intra-group distribution phase ($P_1$) furthermore includes a directional propagation step ($E_5$) during which each chosen propagation mode ($N_1$, $N_2$) transmits the data packet (D) to a relay node ($R_{11}$; 42) moving in the same direction as the propagation node ($N_1$) and located downstream of said propagation mode in relation to the direction of movement ($A_1$) of the propagation node.

**3.** Method according to Claim 2, **characterized in that** the directional propagation step ($E_5$) furthermore includes at least:

- a distribution ($E_{54}$) during which a current relay node distributes the data packet (D) to its neighbouring nodes, and
- a choosing ($E_{52}$) during which a following relay node moving in the same direction as the current relay node and located downstream of said current relay node in relation to the direction of movement of the current relay node is chosen from the neighbouring nodes of said current relay node, said steps of distribution ($E_{54}$) and choosing ($E_{52}$) being repeated until a chosen node is a peripheral node of said group ($E_6$).

**4.** Method according to Claim 1, **characterized in that** it furthermore includes an inter-group distribution phase ($P_2$) during which the data packet (D) is transmitted to a different group of nodes ($G_1$, $G_2$) via a transport node ($T_1$; $T_2$) distributing the data packet during its movement at regular time intervals during a periodic distribution step ($E_{16}$) until said transport node ($T_1$; $T_2$) receives at least one request to distribute (RTB) said packet (D), said request being transmitted by at least one other mobile node (42; $N_1$, $N_2$).

**5.** Method according to Claim 4, **characterized in that** the time interval between two successive iterations of the periodic distribution step ($E_{16}$) is determined by the transport node ($T_1$) as a function of its speed of movement.

**6.** Method according to Claim 4, **characterized in that** the inter-group distribution phase ($P_2$) furthermore includes:

- a test step ($E_{12}$) during which said transport node ($T_1$; $T_2$) determines whether its direction of movement has changed since the last distribution of the packet by said node, and:

- if not, it ($T_1$) acquires the status of propagation node and sends a command to distribute (CTB) said packet (D) to a neighbouring node (42) in response to a distribution request transmitted by said neighbouring node (42);

- if so, it ($T_2$) acquires the status of source node (S) and sends a command to distribute (CTB) said packet (D) to two neighbouring nodes ($N_1$, $N_2$) in response to a distribution request transmitted by the neighbouring nodes.

7. Method according to any one of Claims 1 to 6, **characterized in that** it furthermore includes:

   - a step of receiving a data packet by one of the distribution nodes;
   - a step of determining a waiting time as a function of a distance separating said propagation node from the source node which transmitted said packet.

8. Method according to Claim 7, **characterized in that** it furthermore includes:

   - a step of controlling, at the end of said waiting time, the means for transmitting a request to distribute said packet to said source node;
   - a step of controlling, on reception of a command to distribute said packet, the means for distributing said received packet;
   - a step of distributing the data packet at regular time intervals until the reception of at least one request to distribute said packet from at least one other mobile node; and
   - a step of despatching a command to distribute (CTB) said packet (D) to at least one mobile node (42) having transmitted one of said received requests to distribute (RTB).

9. System for distributing at least one data packet (D), including a set of groups ($G_1$, $G_2$, $G_3$, $G_4$, G) of mobile nodes forming a network, said system being **characterized in that** a group (G) of nodes includes:

   - a source node (S) distributing said at least one data packet (D) to a set of neighbouring nodes ($N_1$, $N_2$, 3, 4, 5, 6, 10) within said group (G) of nodes;
   - two propagation nodes ($N_1$, $N_2$) moving in opposite directions and located on each side of the source node (S), a first neighbouring node of said source node (S) being chosen as the first propagation node ($N_1$), provided that it is located downstream of the source node (S) in relation to the direction of movement of the source node (S) and that it moves in the same direction as the source node (S), and a second neighbouring node of said source node (S) being chosen as the second propagation node ($N_2$), provided that it is located upstream of the source node (S) in relation to the direction of movement of the source node (S) and that it moves in the opposite direction to the direction of movement of said source node (S), each propagation node distributing the data packet.

10. System according to Claim 9, **characterized in that** a group of nodes furthermore includes:

    - at least one relay node ($R_{11}$, $R_{12}$, $R_{13}$; 42) moving in the same direction as one of said propagation nodes ($N_1$) and located downstream of said propagation node in relation to the direction of movement of the propagation node;
    - at least one transport node ($T_1$; $T_2$), located at the periphery of the group of nodes, capable of receiving said data packet from one of said propagation nodes or from one of said relay nodes and of transmitting the data packet to a different group of nodes of said system.

11. System according to Claim 9 or 10, **characterized in that** each propagation node includes:

    - means for receiving a data packet;
    - means for determining a waiting time ($WT_i$) as a function of a distance ($D_i$) separating the propagation node from the source node which transmitted said packet.

12. System according to Claim 11, **characterized in that** each propagation node furthermore includes:

    - means for controlling, at the end of said waiting time ($WT_i$), means for transmitting a request to distribute (RTB) said packet (D) to said source node;
    - means for controlling, on reception of a command to distribute (CTB) said packet, means for distributing said received packet (D);

- means for distributing the data packet at regular time intervals until the reception of at least one request to distribute (RTB) said packet from at least one other mobile node;
- means for despatching a command to distribute (CTB) said packet (D) to at least one mobile node (42) having transmitted one of said received requests to distribute (RTB).

FIG.1

EP 2 220 797 B1

FIG.2

FIG.3

FIG.4

FIG.5

E4

E400

E401

E402

E403

E4033

E4031

E4034

E4032

E404

E405

E406

E408   E407

E409

E410

E411

E412

E413

E414

FIG.6

FIG.7

FIG.8

FIG.9

FIG.10

## EP 2 220 797 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **THOMAS D.C. LITTLE ; ASHISH AGARWAL.** An Information Propagation Scheme for VANETs. *Proceedings of the 8th International IEEE Conference on Intelligent Transportation Systems,* 13 Septembre 2005